# EUROPEAN PATENT APPLICATION

(11) **EP 0 977 152 A2**
(43) Date of publication of application: **02.02.2000**
(21) Application number: 99305784.3
(22) Date of filing: 21.07.1999
(51) Int. Cl.: G06T 9/00

(54) **Data compression apparatus using matching string**

(30) Priority: 28.07.1998 US 123776
(71) Applicant: XEROX CORPORATION, Rochester, New York 14644 (US)
(72) Inventor: Law, Simon M., Torrance, California 90504 (US)
(74) Representative: Skone James, Robert Edmund

(57) **Abstract**

A prior string match array compressor stores a history of a number of previous bytes, compares all of them with the current byte to find matches, and determines the length of the longest matched string and the displacement between the current string and the stored string. A string to be compressed had to be a minimum length of two bytes. To be used in a system where the minimum length is three, the current and next bytes must be tested. on the same cycle. This circuit accomplishes this while using only one comparator per cell by using the comparator to test the next byte, using a delay line to compare the current and next bytes to generate a current match, and uses the current match and the initialize signal in a logic circuit to generate the displacement signal. If there was no match in any cell on the previous cycle, the output is the previous match AND the current match. If there was a match on any cell, the output is the previous cell displacement signal AND the current match.

## Description

A circuit for compressing data using string matching of the type known in the industry as GZIP where the minimum match length is three, the circuit having only one comparator per cell.

One common form of compression compares each current input byte to a string of previously received bytes and signals when there are one or more matches. If the register holding the previous bytes is large enough, 4K bytes for example, then a number of matches will be found. The process then goes on to the next byte, to see if any cell showing the first match will also match on the next byte. Perhaps several will show a match. The process continues until the largest string of matching bytes is assembled. This string is then described as the number of bytes in the string and the displacement, that is, the number of bytes there are between the first byte of the current string and the first byte of the longest matching string in the register. In most cases the number of bytes in the string and the displacement can be described in fewer bits than the original data, and compression results.

The bytes can be any size, and be representative of any kind of data. The remainder of this discussion will assume 8 bits per byte and that the byte is a pixel of video, but any other number of bits per byte, and representing any other kind of data, such as character coded data, would be equally pertinent.

In EP-A-0907146, incorporated by reference herein, such a method, and a circuit for performing the method, was described. In that case, the minimum match length was two. That is, compression would be applied if as few as two pixels in series were matched by previous pixels in the register. A comparator circuit in each stage would compare pixels and register a first match if there was one or more. Then a second byte would be compared. If there was no match in the same cell, the first byte would be sent out without compression. If there was a second match, the first signal would be used as the first byte of the string to be compressed.

A complication arises when the circuit is modified to work with a minimum string length of three. When the first match is found, all non-matching cells are turned off. If there is a second match, the pixel is still not sent out, and if there is no third match, the minimum match length has not been achieved. The process must now back up to the second byte, and process it as a first byte, since it may be first byte of a new string in a cell that was turned off. Of course, backing up the string of bytes degrades the performance greatly.

Another possible implementation is to pipeline the current bytes, and after the first byte is found, test both the second and third bytes for a match. This requires two comparators per cell. A more efficient circuit for a minimum match length of three is needed.

In accordance with the present invention, we provide a string match array of cells, the array containing an encoder for generating and applying to every cell an initialize signal if none of the cells generates a displacement signal, each cell comprising a register for storing one byte of an input byte string of previous, current and next bytes, and a circuit in each cell for generating the displacement signal, the circuit including:
a comparator for determining and generating an output if the next byte and the contents of the register are equal,
means for delaying the previous comparator output,
means responsive to the comparator and delayed comparator outputs for generating a current match signal if both the current byte and delayed previous byte matched,
means for delaying the current match signal to produce a previous match signal,
in the presence of the initialize signal, outputting as the displacement signal the previous match AND the current match, and
in the absence of the initialize signal, outputting the current match and the previous displacement signal.

This circuit uses a single comparator per cell by generating one signal which is true only if the previous and current bytes (A and B) matched, and another signal which is true only if the current (B) and next byte (C) match. If all three match, the circuit will continue to match until the end of the string, and compress the result. If all three do not match, then the process sends out the previous byte A as raw data and restarts the process at the current B byte.

The signal which is true if two bytes match is generated by one comparator. A first comparison, for the B byte, is generated by the single comparator, and applied to the input of a flipflop. On the next clock cycle, the comparison signal for B, which is now being output by the flip flop, is ANDed to the C output, a high output at the output of the AND gate showing that both comparisons B and C showed a match. Similarly, another flipflop has a one-cycle delayed output showing whether there was an A+B match on the previous cycle.

A logic circuit is provided to use byte A as the first byte of a new string if both signals A+B and B+C are true. If A+B shows a match, but B+C does not, then all cells are reset and B is saved as the possible first byte of a new string. If A+B and B+C both fail, then all cells are reset and the process starts from the beginning with byte C. The result is that three matches in a row at the same cell are required to start a string, and only one comparator per cell is required.

An example of a string match array according to the present invention will now be described with reference to the accompanying drawings, in which:-
Figure 1 is a circuit of the entire array; and,
Figure 2 is a circuit of the logic section of one cell.

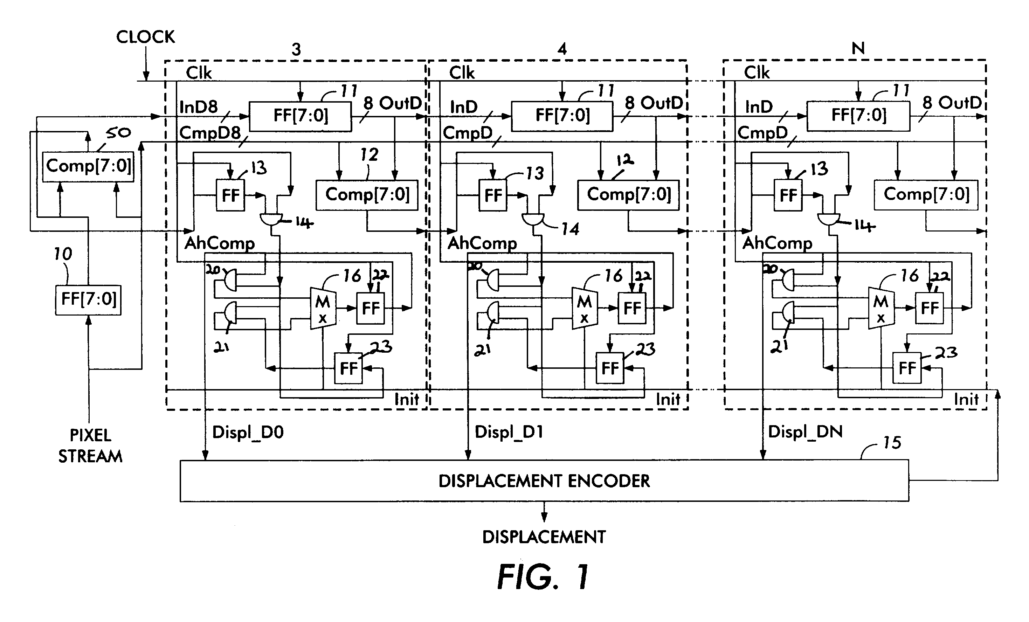

In order to operate with a minimum match length of three, when the cells are determining the existence of a match length of two, the circuit must also be able to determine on the same cycle whether a match length of three will occur on the next cycle. The string match array of Figure 1 is designed to do so.

In Figure 1, a number of cells 3-N are illustrated each having substantially the same construction. The construction of the cell 4 will be described in more detail. A clock signal Clk is applied to a register 11 which receives an input from a corresponding register 11 from a downstream cell or, in the case of the cell 3, the input pixel stream via a register 10. The output from the register 11 is fed to a register 11 of the next, downstream cell and also to a comparator 12. The other input to the comparator 12 is the current pixel stream. The output from the comparator 12 is fed to one input of an AND gate 14 of the next downstream cell.

The cell 4 also contains a flip-flop FF 13 controlled via the clock Clk and which receives as an input, the output from the downstream comparator 12. The output of the FF 13 is fed to the other input of the AND gate 14.

The output of the AND gate 14 is applied to one input of each of two AND gates 20,21 and also to a FF 23. The FF 23 is also controlled by the Clk signal and its output is fed to the other input of the AND gate 21.

The outputs of the AND gates 20,21 are applied to a multiplexer 16 whose output is fed to an FF 22 (controlled by the Clk signal), the output of the FF 22 being fed to the other input of AND gate 20 and to the displacement encoder 15.

The input pixel stream, as well as being fed directly to the comparators 12, is also fed via the register 10 to a comparator 50 whose output is applied to the AND gate 14 of the cell 3.

Assume a byte string, [x, c', b', a', d, c, b, a], proceeding to the right through the registers 11 of the numbered cells of Figure 1. Assume that a' = a, b' = b, etc. On the first pass, a through d would be sent out as raw video, but the string c', b', a' would be a matching three byte string and should be compressed into "3, 4" indicating that the string is three bytes long and matches the string that was output 4 bytes earlier.

Assume that b' is the current bit, and c' is the next bit, which is applied to all of the comparators, including comparator 12 of cell 3. The other input to comparatorl2 is the contents of cell register 11 which contains, and therefore is outputting byte c. The two are matched in comparator 12 and there is an output C, which signifies that c = c'. By similar reasoning, on the previous cycle, b = b' and so the output of clocked FF 13 of cell #4 is B. Both B and C are applied to AND gate 14, and the output is B+C, showing that a "current match" at cell #3 was found on both b' and c' bytes. By a similar process, on the previous cycle, the output of FF 13 was A + B.

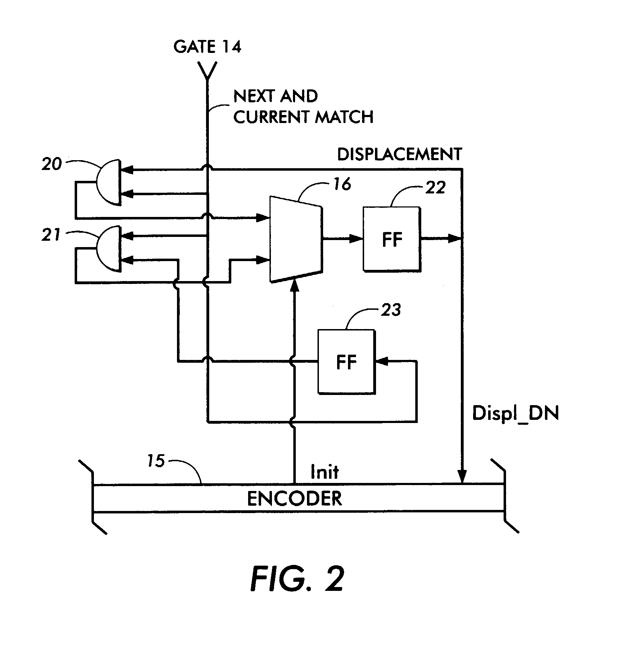

The other signal input to the remainder of the cell #4 circuit, also shown in Figure 2, is the initialize signal (Init). As long as any displacement signal (Displ_x) from any cell to the encoder 15 shows a match by going high, the Init signal stays low. The remainder of the circuit then uses these two signals, the Init signal plus the output of AND gate 14 to control the displacement line, which is the output of the cell. There are five possible outcomes.

If there is no current match (B+C), then one input to both gates 20, 21 is low, a 1 or 0 input to the multiplexer will lead to a low output, and after being clocked, the FF22 output will be low, signifying no match. If there is no current match then the displacement output will always be low, regardless of any other signal.

If there is a current match and the previous cell output (the output during the previous clock period) was high, then the Init signal will be a 0 since at least one cell had a high output, the 0 input of the mux 16 will be selected, and the high state will be applied through the mux to FF 22, so that on the next clock, the output displacement signal will go high. This would be the continuation of a matched string that has already been started in the cell.

If there was no previous match, a current match, and the previous cell output was low, then either gate will put out a low, and the next cell output will be low. This is the situation where at least one other cell has started a string, and this cell is disabled.

If there was no previous cell output, but a current match and a previous match, and the Init line is a 1, showing no matches on any cell, then gate 21 is selected, and the output is high. This would be the case where this cell is starting a new string.

Finally, if there are previous and current matches, the previous cell output was low and there was at least one other cell output, Init will be a 0, gate 20 is selected and the output will be low, indicating that this cell is disabled.

## Claims

1. A string match array of cells, the array containing an encoder for generating and applying to every cell an initialize signal if none of the cells generates a displacement signal, each cell comprising a register for storing one byte of an input byte string of previous, current and next bytes, and a circuit in each cell for generating the displacement signal, the circuit including:
a comparator for determining and generating an output if the next byte and the contents of the register are equal,
means for delaying the previous comparator output,
means responsive to the comparator and delayed comparator outputs for generating a current match signal if both the current byte and delayed previous byte matched,
means for delaying the current match signal to produce a previous match signal,
in the presence of the initialize signal, outputting as the displacement signal the previous match AND the current match, and
in the absence of the initialize signal, outputting the current match and the previous displacement signal.
